(19)

Europäisches Patentamt
European Patent Office
Office européen des brevets

(11) **EP 4 549 497 A1**

(12) **EUROPEAN PATENT APPLICATION**
published in accordance with Art. 153(4) EPC

(43) Date of publication:
**07.05.2025  Bulletin 2025/19**

(21) Application number: **23831564.2**

(22) Date of filing: **29.06.2023**

(51) International Patent Classification (IPC):
*C08J 5/18* (2006.01)     *B29C 55/12* (2006.01)

(52) Cooperative Patent Classification (CPC):
**B29C 55/12; C08J 5/18**

(86) International application number:
**PCT/JP2023/024129**

(87) International publication number:
**WO 2024/005125 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022  JP 2022106528**

(71) Applicant: **Oji Holdings Corporation
Chuo-ku
Tokyo 104-0061 (JP)**

(72) Inventors:
• **OKUMURA, Mako
Tokyo 104-0061 (JP)**
• **ASANO, Shinichi
Tokyo 104-0061 (JP)**

(74) Representative: **Müller-Boré & Partner
Patentanwälte PartG mbB
Friedenheimer Brücke 21
80639 München (DE)**

(54) **BIAXIALLY STRETCHED FILM AND PROTECTIVE FILM**

(57)    Provided are a biaxially stretched film having both punching processability and heat resistance although the film is formed from polylactic acid; and a protective film comprising the biaxially stretched film.

The biaxially stretched film of the present invention comprises polylactic acid,
the biaxially stretched film having a film tear strength of 50 N/mm or more and less than 100 N/mm when torn in at least one direction, as measured in accordance with JIS-K7128-3, and
the biaxially stretched film having a heating dimensional change rate of within ±5% in both the machine direction (MD) and the traverse direction (TD) in a 100°C atmosphere and a heating load dimensional change rate of within ±7% in the MD in a 100°C atmosphere.

**EP 4 549 497 A1**

**Description**

Technical Field

The present invention relates to a biaxially stretched film and a protective film.

Background Art

Resin films are highly useful functional materials widely used in various applications, such as packaging materials for food and medicines and protective films for displays, because of their excellent moisture resistance, water resistance, oil resistance, and other properties, as well as good mechanical strength.

On the other hand, in recent years, various problems have been raised, such as an increase in the amount of plastic material waste and concern that the carbon dioxide generated by the incineration disposal of plastic materials may cause global warming. For this reason, biodegradable biomass plastics have been attracting a great deal of attention from the viewpoint of the global environment and consideration for the human body, and the development of various materials in which conventional plastic materials are combined with biomass plastics has been actively pursued.

Polylactic acid is a typically known biomass plastic. However, its heat resistance or mechanical properties, such as impact resistance and tear resistance, are inferior to those of conventional plastics. To solve this problem, the drawbacks of polylactic acid are commonly compensated for by methods, such as combining polylactic acid with another component (e.g., see Patent Literature (PTL) 1).

Citation List

Patent Literature

PTL 1: JP4699180B

Summary of Invention

Technical Problem

Although various methods have been proposed to address the drawbacks of polylactic acid as described above, there is still room for improvement in biaxially stretched films containing polylactic acid. In particular, a biaxially stretched film that has mechanical properties, heat resistance, and processability although it is formed from a biodegradable resin, such as polylactic acid, can be used for various applications. Thus, there is an urgent need to develop such a biaxially stretched film.

The present invention has been accomplished in view of the above. An object of the invention is to provide a biaxially stretched film that is formed from polylactic acid and further has both punching processability and heat resistance; and a protective film comprising the biaxially stretched film.

Solution to Problem

The present inventors conducted extensive research to achieve the above object, and found that the object can be achieved by forming a film from a polylactic acid resin and setting the tear strength within a specific range. The present invention has thus been accomplished. In particular, the inventors successfully found for the first time that punching processability depends on tear strength. The present invention has been completed based on these findings.

Specifically, the present invention includes, for example, the subject matter described in the following items.

Item 1 A biaxially stretched film comprising polylactic acid,

the biaxially stretched film having a film tear strength of 50 N/mm or more and less than 100 N/mm when torn in at least one direction, as measured in accordance with JIS-K7128-3, and

the biaxially stretched film having a heating dimensional change rate of within $\pm$5% in both the machine direction (MD) and the traverse direction (TD) in a 100°C atmosphere and a heating load dimensional change rate of within $\pm$7% in the MD in a 100°C atmosphere.

Item 2 The biaxially stretched film according to Item 1, wherein the at least one direction is the MD or the TD.

Item 3 A protective film comprising the biaxially stretched film of Item 1 or 2.

Advantageous Effects of Invention

The biaxially stretched film of the present invention has both punching processability and heat resistance although it is a film formed from polylactic acid.

Description of Embodiments

Embodiments of the present invention are described in detail below. In the present specification, the terms "comprise" and "contain" include the concepts of "comprise," "contain," "consist essentially of," and "consist of."

1. Biaxially Stretched Film

The biaxially stretched film of the present invention comprises polylactic acid, the biaxially stretched film having a film tear strength of 50 N/mm or more and less than 100 N/mm when torn in at least one direction, as measured in accordance with JIS-K7128-3, and the biaxially stretched film having a heating dimensional change rate of within ±5% in both the MD and the TD in a 100°C atmosphere and a heating load dimensional change rate of within ±7% in the MD in a 100°C atmosphere.

The biaxially stretched film of the present invention has appropriate tear strength, good punching processability, and further excellent heat resistance although it is a film formed from polylactic acid, and therefore has high dimensional stability.

In the biaxially stretched film of the present invention, the type of polylactic acid is not particularly limited, and for example, a wide variety of known polylactic acids can be used. For example, a wide variety of known polylactic acids, such as polylactic acid obtained by condensation polymerization of a lactic acid component as a starting material monomer, can be used. The polylactic acid may comprise either one of the optical isomers, i.e., L-lactic acid (L-form) or D-lactic acid (D-form), or both.

The melting point of the polylactic acid is preferably, for example, 110°C to 200°C. In this case, the heat resistance of the resulting biaxially stretched film is less likely to decrease, and the stretching ratio can be easily adjusted. The melting point of the polylactic acid is preferably 120°C to 190°C, more preferably 130°C to 185°C, and even more preferably 140°C to 180°C.

The glass transition temperature of the polylactic acid is not particularly limited and may be, for example, -40°C to 70°C, and preferably 0°C to 70°C.

In the present invention, the melting point and glass transition temperature of the polylactic acid are values measured using a differential scanning calorimeter (e.g., Diamond DSC, which is a power-compensation DSC, produced by PerkinElmer).

The melt mass flow rate of the polylactic acid is not particularly limited. The melt mass flow rate of the polylactic acid is preferably 0.5 g/10 min to 15 g/10 min, more preferably 1 g/10 min to 10 g/10 min, and even more preferably 2 g/10 min to 10 g/10 min, from the viewpoints that the fluidity of the resin is within an appropriate range, the size of a fine dispersion can be easily controlled, and the desired biaxially stretched film can be easily produced. The "melt mass flow rate" as used herein refers to a value measured at 230°C and 21.18 N in accordance with JIS K-7210 (1999).

The method for producing the polylactic acid is not particularly limited, and for example, a wide variety of known production methods can be used. The polylactic acid can also be obtained from a commercially available product etc. Examples of typical commercially available products of the polylactic acid include 4032D (melting point: 163°C) produced by NatureWorks; L175 (melting point 175°C), LX175 (melting point: 155°C), LX930 (melting point 130°C), all of which are produced by Total Corbion; and the like.

The polylactic acid contained in the biaxially stretched film may be one type alone or two or more types.

In the biaxially stretched film of the present invention, the content of the resin component other than the polylactic acid is preferably 10 mass% or less, more preferably 5 mass% or less, even more preferably 1 mass% or less, and particularly preferably 0.1 mass% or less, based on the polylactic acid. The biaxially stretched film of the present invention may consist of the polylactic acid as a resin component.

The biaxially stretched film of the present invention may comprise additives in addition to the polylactic acid as long as the effects of the present invention are not impaired. Examples of additives include heat stabilizers, antioxidants, organic and inorganic lubricants, chlorine scavengers, antistatic agents, anti-fog agents, hydrolysis inhibitors, and the like.

When the biaxially stretched film of the present invention comprises an additive, the content of the additive is not particularly limited. In terms of easily obtaining a biaxially stretched film having high heat resistance and good punching processability, the content of the polylactic acid in the biaxially stretched film of the present invention is preferably 80 mass% or more, more preferably 90 mass% or more, even more preferably 95 mass% or more, and particularly preferably 99 mass% or more.

The biaxially stretched film of the present invention has a film tear strength of 50 N/mm or more and less than 100 N/mm when torn in at least one direction, as measured in accordance with JIS-K7128-3. Specifically, the film tear strength is measured in accordance with JIS-K7128-3, Plastics-Film and sheeting-Determination of tear resistance, Part 3: Right angled tear method.

If the biaxially stretched film has a film tear strength of less than 50 N/mm when torn in at least one direction, the film has insufficient mechanical strength and is easily damaged, which makes it difficult to use the film for various applications. On the other hand, if the biaxially stretched film has a film tear strength of more than 100 N/mm when torn in at least one direction, the punching processability becomes poor.

The biaxially stretched film of the present invention has a film tear strength of preferably 55 N/mm or more, more preferably 60 N/mm or more, even more preferably 65 N/mm or more, and particularly preferably 70 N/mm or more, when torn in at least one direction.

The biaxially stretched film of the present invention also has a film tear strength of preferably 95 N/mm or less, and more preferably 90 N/mm or less, when torn in at least one direction.

In the phrase "when torn in at least one direction," the at least one direction is preferably the MD and/or the TD, more preferably the MD. That is, it is preferred that the biaxially stretched film of the present invention has a film tear strength of 50 N/mm or more and less than 100 N/mm when torn in the MD and/or the TD as measured in accordance with JIS-K7128-3, and it is more preferred that the biaxially stretched film of the present invention has a film tear strength of 50 N/mm or more and less than 100 N/mm when torn in the MD as measured in accordance with JIS-K7128-3. In these cases, in particular, the punching processability of the biaxially stretched film can be easily improved. For the sake of clarity, in the present specification, the MD means the machine direction of the film in biaxial stretching, and the TD means the direction perpendicular to the MD, i.e., the traverse direction of the biaxially stretched film.

In the biaxially stretched film of the present invention, the method for adjusting the tear strength is not particularly limited. For example, the film tear strength can be adjusted by the thickness of the biaxially stretched film or the production conditions for the biaxially stretched film. In particular, by adjusting the stretching ratio and/or adjusting the relaxation conditions and heat treatment conditions of the film after stretching, which are described later, the film tear strength can be easily adjusted to a more appropriate range.

The biaxially stretched film of the present invention has a heating dimensional change rate of within $\pm 5\%$ in both the MD and the TD in a 100°C atmosphere and a heating load dimensional change rate of within $\pm 7\%$ in the MD in a 100°C atmosphere. This allows the biaxially stretched film of the present invention to have excellent dimensional stability and excellent heat resistance.

The biaxially stretched film of the present invention has a heating dimensional change rate of preferably within $\pm 4\%$, more preferably within $\pm 3\%$, and particularly preferably within $\pm 2.5\%$, in both the MD and the TD in a 100°C atmosphere.

The biaxially stretched film of the present invention has a heating load dimensional change rate of preferably within $\pm 6\%$, more preferably within $\pm 5.5\%$, even more preferably within $\pm 5\%$, and particularly preferably within $\pm 4.9\%$, in the MD in a 100°C atmosphere.

The thickness of the biaxially stretched film of the present invention is not particularly limited, and can be appropriately set depending on the intended use. In terms of easily adjusting the tear strength of the biaxially stretched film, the thickness of the biaxially stretched film is, for example, preferably 5 to 150 $\mu$m, more preferably 10 to 100 $\mu$m, and even more preferably 15 to 90 $\mu$m.

The biaxially stretched film of the present invention may have a single layer structure or a multilayer structure. When the biaxially stretched film of the present invention has a multilayer structure, for example, one or more other layers may be provided on one or both sides of the polylactic acid layer.

Examples of other layers include layers formed in known protective films. For example, a repositionable pressure-sensitive adhesive layer can be provided on one or both sides of the layer (substrate) containing polylactic acid. The type of repositionable pressure-sensitive adhesive layer is not particularly limited, and may have, for example, the same structure as known repositionable pressure-sensitive adhesive layers. Furthermore, if necessary, another layer (intermediate layer) may be present between the substrate and the repositionable pressure-sensitive adhesive layer. In addition, a separator may be provided on the repositionable pressure-sensitive adhesive layer to protect the repositionable pressure-sensitive adhesive layer until the protective film is used.

The biaxially stretched film of the present invention comprises polylactic acid as an essential component and has tear strength within a predetermined range. Thus, although it is a film formed from polylactic acid, the film has appropriate tear strength, good punching processability, and excellent heat resistance, and therefore has high dimensional stability. In particular, it was previously believed that there was no relationship between tear strength and punching processability; however, the present inventors have succeeded in finding for the first time that punching processability depends on tear strength, and have thus completed the biaxially stretched film of the present invention.

The biaxially stretched film of the present invention can be suitably used for protective films, food packaging, medicine packaging, decorations (including fashion), labels, fusion-sealed bags, substrates for tapes, substrates for printing, stationery, home appliances, poster paper, thermal paper substrates, recording paper substrates, interior and exterior use of houses, automobiles, containers, and the like.

For example, when the biaxially stretched film of the present invention is applied to a protective film, it can be used for various electronic devices. The protective film comprises the biaxially stretched film of the present invention and is therefore excellent in processability and heat resistance.

2. Method for Producing Biaxially Stretched Film

The method for producing the biaxially stretched film of the present invention is not particularly limited, and for example, a wide variety of known production methods can be used. For example, the stretched film of the present invention can be produced by extruding a resin raw material containing at least polylactic acid to obtain a resin sheet, and stretching the resin sheet. This production method is referred to as "production method A."

The resin raw material used in production method A may contain various additives, if necessary.

The resin raw material can be prepared in the same manner as in, for example, known preparation methods. Examples include a method in which resin pellets, powder, or the like is dry-blended using a batch-type mixing device, such as a tumbler or a mixer, or a continuous metering mixing device; a method in which resin pellets, powder, or the like is supplied to a kneader, optionally with other resin pellets or powder and/or additives, followed by melt-kneading, thereby obtaining a melt-blended resin composition; and the like. Among these, it is preferable to prepare the resin raw material by melt kneading.

As the kneader used for melt kneading, known kneaders can be used, and a single-screw kneader, a twin-screw kneader, or a multi-screw kneader with more than two screws can be used. Further, when a kneader having two or more screws is used, the type of kneading may be rotation in the same direction or in different directions. In terms of easily kneading polylactic acid, a twin-screw kneader in which the type of kneading is rotation in the same direction is preferable.

The kneading temperature in melt kneading is preferably in the range of 200°C to 300°C, and more preferably 220°C to 280°C. To prevent deterioration of the resin during melt kneading, the kneader can be purged with an inert gas, such as nitrogen. The melt-kneaded resin may be pelletized into a suitable size using a commonly known pelletizer. As a result, melt-blended resin composition pellets can be obtained.

In production method A, a resin sheet can be obtained by using the resin raw material obtained as described above. Specifically, a resin sheet can be obtained by supplying the resin raw material to an extruder, heat-melting the resin raw material, then, if necessary, removing minute foreign matter etc. with a filter or the like, and thereafter, melt extruding the melt into a sheet from a T-die.

As the extruder used to obtain the resin sheet, for example, a wide variety of known extruders can be used. The screw type of the extruder is not limited, and a single-screw extruder, a twin-screw extruder, or a multi-screw extruder with more than two screws can be used. When the resin raw material is prepared by the dry blending described above, mixing and dispersibility are easily improved by using a twin-screw type or a multi-screw type with more than two screws. The extrusion temperature is preferably in the range of 200°C to 300°C, more preferably 220°C to 280°C. To prevent heat deterioration of the resin during extrusion, the extruder can be purged with an inert gas, such as nitrogen.

The resin sheet obtained by melt extrusion is formed into a sheet by a known method, for example, by bringing the resin sheet in close contact with at least one or more metal drums set at a temperature of 25 to 120°C using an air knife, another roll, static electricity, or the like, and the resin sheet is obtained as a raw sheet. The temperature of the metal drums is more preferably 30 to 80°C.

Production method A may further comprise a lamination step, if necessary. For example, in the case of obtaining a stretched film in which layer b is formed on one or both sides of layer a, production method A preferably comprises a lamination step.

In the lamination step, for example, a wide variety of conventionally used lamination methods can be used. For example, a film may be obtained by performing laminating by coextrusion, lamination, heat sealing, or the like.

Specifically, when a stretched film having a laminated structure is produced, two or more dry-blended and/or melt-blended resin compositions (the formulations of the individual resin compositions may be different or the same) can be coextruded to obtain a resin sheet having a laminated structure, and the resin sheet having such a laminated structure can be stretched. Alternatively, a stretched film having a laminated structure can be produced by laminating a stretched film having a single-layer structure and another film. A stretched film having a laminated structure can also be produced by stretching a multilayer unstretched film (the formulations of the resin compositions forming the individual layers may be different or the same) obtained by laminating two or more unstretched films extruded as single layers.

Examples of coextrusion include a pre-die lamination method in which molten resins are brought into contact in a feed block before a die, an in-die lamination method in which molten resins are brought into contact in a path in a die, such as a multi-manifold die, an out-die lamination method in which molten resins are discharged from a plurality of concentric lips and brought into contact, and the like. For example, in the case of the in-die lamination method, a three-layer structure of layer bilayer a/layer b, composed of surface layers (skin layers; layers b) and a core layer (intermediate layer; layer a), can be formed by using a multilayer die, such as a three-layer multi-manifold die.

Examples of lamination include an extrusion lamination method in which a molten resin film is extruded directly onto another film to form a laminated film using equipment for melt extrusion molding used in a T-die method; and the like.

Examples of heat sealing include an external heating method in which a heated metal body is pressed against a plurality of films attached to each other from the outside of the films, and the conducted heat melts the films to bond them; an internal heating method in which heat is generated in films by high-frequency radio waves or ultrasonic waves to bond the films; and the like.

In production method A, the lamination methods described above may be used singly or in a combination of two or more.

As described above, when production method A comprises a lamination step, the resin sheet can have a laminated structure; and when production method A does not comprise a lamination step, the resin sheet has a single-layer structure. When a resin sheet having a single layer structure is stretched as described below, a biaxially stretched film composed of layer a can be obtained. When a resin sheet having a laminated structure is stretched as described below, a multilayer biaxially stretched film comprising at least layer a can be obtained.

In production method A, the resin sheet (raw sheet) having a single-layer or laminated structure described above is stretched. As the stretching method, known methods, such as a method of stretching between rolls having different peripheral speeds, a tenter method, and a tubular method, can be used. Regarding the stretching direction, uniaxial stretching, biaxial stretching, oblique biaxial stretching, and the like are possible; and in biaxial or higher multiaxial stretching, sequential stretching and simultaneous stretching can be applied. Of these, from the viewpoint of easily obtaining the desired biaxially stretched film, simultaneous biaxial stretching by a tenter method, sequential biaxial stretching by a tenter method, and sequential biaxial stretching in which longitudinal (machine direction, MD) stretching is performed between rolls having different peripheral speeds, and then transverse (traverse direction, TD) stretching is performed by a tenter method, are preferable. A method for obtaining the biaxially stretched film of the present invention by sequential biaxial stretching is described below; however, the method is not limited thereto.

In the sequential biaxial stretching method, it is preferable to adjust the stretching temperature and the stretching ratio according to the melting point and glass transition temperature of the resin used. First, the resin sheet (raw sheet) is kept at a temperature of preferably 50 to 130°C, more preferably 60 to 100°C and stretched preferably 2- to 6-fold, more preferably 2.5- to 5-fold, even more preferably 3- to 4-fold in the longitudinal direction by passing the sheet between rolls having different peripheral speeds or by a tenter method. Subsequently, the stretched film is stretched preferably 2- to 6-fold, more preferably 2.5- to 5-fold, even more preferably 3- to 4-fold in the transverse direction at a temperature of preferably 50 to 130°C, more preferably 60 to 100°C, by a tenter method. The film is subjected to relaxation treatment and heat setting treatment as heat treatment of the film and then wound. The wound film can be subjected to aging treatment in an atmosphere of preferably about 20 to 45°C and then cut to a desired product width.

The conditions for the relaxation treatment is preferably such that the film after transverse stretching is relaxed at about 60°C to 70°C. In this case, the tear strength of the film is easily adjusted within a predetermined numerical range. In the relaxation treatment, the relaxation speed is preferably 0.3-fold/sec to 0.7-fold/sec. In this case, the tear strength of the film is easily adjusted within a predetermined numerical range. The conditions for the heat setting treatment are preferably as follows: at a temperature of 100°C to 130°C for 10 to 80 seconds (more preferably 15 to 60 seconds, even more preferably 20 to 40 seconds). In this case, the tear strength of the film is easily adjusted within a predetermined numerical range. By adjusting the conditions for at least one of the above-mentioned stretching ratio, relaxation treatment, and heat setting treatment, the tear strength can be easily adjusted within a predetermined numerical range.

When the relaxation treatment and heat setting treatment described above are performed, the thickness of the biaxially stretched film is preferably less than 50 μm, more preferably 45 μm or less, and even more preferably 40 μm or less. When the relaxation treatment or heat setting treatment described above is not performed, the thickness of the biaxially stretched film is preferably 40 μm or more, and more preferably 50 μm or more, and is also preferably 100 μm or less, more preferably 90 μm or less, and even more preferably 80 μm or less.

The various features (properties, structures, functions, etc.) described in each embodiment of the present disclosure described above may be combined in any way in specifying the subject matter included in the present disclosure. That is, this disclosure includes all of the subject matter comprising any combination of the combinable features described herein.

Examples

The present invention is described in detail below with reference to Examples; however, the present invention is not limited to these Examples.

Example 1

Luminy (registered trademark) LX175 (produced by Total Corbion PLA, polylactic acid) was prepared as polylactic acid, supplied into a single-screw extruder from a hopper, melted, and extruded from a single-layer die. The extruded resin layer was cooled and solidified while being pneumatically pressed onto a cooling drum controlled at 45°C using an air knife to obtain a raw sheet.

The obtained raw sheet was stretched using a KARO batch-type biaxial stretching machine produced by Brückner. The stretching method was a sequential biaxial stretching method in which the sheet was stretched in the longitudinal direction and then stretched in the transverse direction. The sheet was preheated in an oven set at 70°C until the film temperature (Ts) reached 65°C, and then stretched up to 3-fold in the longitudinal direction at a stretching speed of 6-fold/sec. Next, the sheet was preheated in an oven set at 70°C until the film temperature reached 65°C, and then stretched up to 3.5-fold in the transverse direction at a stretching speed of 1-fold/sec. Subsequently, in the same oven, the sheet was relaxed up to 3.0-fold in the transverse direction at a relaxing speed of 0.5-fold/sec and then subjected to heat setting treatment at 120°C for 30 seconds as heat treatment, removed from the oven, and cooled to room temperature to obtain a biaxially stretched film having a thickness of 20 $\mu$m.

Example 2

A biaxially stretched film was obtained in the same manner as in Example 1, except that the thickness was 30 $\mu$m.

Example 3

A biaxially stretched film was obtained in the same manner as in Example 1, except that the thickness was 40 $\mu$m.

Example 4

A biaxially stretched film having a thickness of 20 $\mu$m was obtained in the same manner as in Example 1, except that the heat setting treatment time was 60 seconds.

Example 5

A biaxially stretched film was obtained in the same manner as in Example 4, except that the thickness was 30 $\mu$m.

Example 6

A biaxially stretched film was obtained in the same manner as in Example 1, except that neither relaxation treatment nor heat setting treatment was performed, and the thickness was 50 $\mu$m.

Comparative Example 1

A biaxially stretched film having a thickness of 20 $\mu$m was obtained in the same manner as in Example 1, except that the heat setting treatment time was 90 seconds.

Comparative Example 2

A biaxially stretched film was obtained in the same manner as in Comparative Example 1, except that the thickness was 30 $\mu$m.

Comparative Example 3

A biaxially stretched film was obtained in the same manner as in Example 1, except that the thickness was 50 $\mu$m.

Comparative Example 4

A biaxially stretched film was obtained in the same manner as in Example 1, except that the heat setting treatment was not performed.

Thickness of Film

The thickness of each biaxially stretched film was measured using an MEI-11 paper thickness measuring instrument, produced by Citizen Seimitsu Co., Ltd. in accordance with JIS-C2330.

Stretchability

The stretchability was evaluated using a KARO batch-type biaxial stretching machine produced by Brückner. The stretching method used was a sequential biaxial stretching method in which stretching in the longitudinal direction is performed, and then stretching in the transverse direction is performed. A raw sheet was preheated in an oven set at a temperature of 70°C to reach a film temperature (Ts) of 65°C, and then stretched in the longitudinal direction at a stretching speed of 6-fold/sec to a 3-fold stretching ratio. Subsequently, after the film temperature (Ts) reached 65°C in the same oven, the sheet was stretched in the transverse direction at a stretching speed of 1-fold/sec to a 3.5-fold stretching ratio. The stretchability of the obtained stretched film was evaluated according to the following criteria.

Criteria for Stretchability

Excellent: The film was uniformly stretched, and the thickness variation was small; the film was particularly excellent in stretchability.
Poor: The film could not be stretched, and broke.

Film Tear Strength

The film tear strength was measured in accordance with JIS-K7128-3, Plastics-Film and sheeting-Determination of tear resistance, Part 3: Right angled tear method. Specifically, the film tear strength when the biaxially stretched film was torn in the MD was measured.

Heating Dimensional Change Rate

Each of the biaxially stretched films obtained in the Examples and Comparative Examples was cut into a size of 100 mm × 100 mm, and 50 mm marking lines were drawn parallel to the machine direction (hereinafter referred to as "MD") and the traverse direction (hereinafter referred to as "TD") in film formation. Each of the biaxially stretched films was then placed in an oven heated to 100°C for 1 minute. Thereafter, each film was removed, and the length L1 of the marking line along the MD before the test and the length L2 of the marking line along the MD after the test were measured. The heating dimensional change rate in the MD was calculated using the following formula. (In the same manner, the length L1 of the marking line along the TD before the test and the length L2 of the marking line along the TD after the test were measured, and the heating dimensional change rate in the MD was calculated using the following formula.)

$$\text{Heating dimensional change rate (\%)} = \{(L2-L1)/L1\} \times 100$$

Heating Load Dimensional Change Rate

Each of the biaxially stretched films obtained in the Examples and Comparative Examples was cut into a size of 100 mm (MD) × 20 mm (TD). A 50 mm marking line was drawn parallel to the MD, and each film was then placed in an oven heated to 100°C for 1 minute while applying a load of 300 g per mm$^2$ in the MD. Thereafter, each film was removed, and the length L3 of the marking line along the MD before the test and the length L4 of the marked line along the MD after the test were measured. The heating load dimensional change rate in the MD was calculated using the following formula.

$$\text{Heating load dimensional change rate in MD (\%)} = \{(L4-L3)/L3\} \times$$

Punching Processability

Each of the biaxially stretched films obtained in the Examples and Comparative Examples was individually placed on a punch die having a size of 60 mm (width) × 120 mm (length), and a 188 μm-thick PET film and a 5 mm-thick polycarbonate plate were sequentially stacked on the film to obtain a laminate. The laminate was punched out using an electrically driven press (produced by DIE TECS, PAC-HD) at a press pressure of 5 t and a speed of 10 mm/sec. The film end surface of the punched laminate was visually checked for roughness, cracks, etc., and the punching processability was evaluated according to the following criteria.

Excellent: There was no roughness on the end surface, and there was no problem at all in use.
Good: The end surface was rough, but there was no problem in use.
Poor: The end surface was significantly rough, which causes a problem in use.

Table 1

| Example /Comparative Example | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| Heat treatment time (sec) | | | 30 | 30 | 30 | 60 | 60 | Not performed | 90 | 90 | 30 | Not per-formed |
| | Thickness (μm) | | 20 | 30 | 40 | 20 | 30 | 50 | 20 | 30 | 50 | 20 |
| | Stretchability | | Excellent | Excellent | Excellent | Excellent | Excellent | Excellent | Excellent | Excellent | Excellent | Excellent |
| Physical properties of biaxially stretched film | Tear strength (N/mm) | | 67 | 70 | 75 | 83 | 95 | 88 | 101 | 128 | 109 | 34 |
| | Heating dimensional change rate (%) | MD | -2.0 | -2.3 | -2.5 | -1.5 | -0.9 | -1.7 | 0.3 | 0.1 | 0.3 | -3.1 |
| | | TD | 0.0 | 0.2 | -0.2 | 0.1 | -0.2 | -0.1 | -0.2 | -0.3 | -0.1 | -2.5 |
| | Heating load dimensional change rate in MD (%) | | -5.0 | -4.9 | -5.0 | -4.6 | -4.5 | -0.6 | -2.0 | -2.3 | -1.9 | -6.5 |
| Punching processability | | | Excellent | Excellent | Excellent | Good | Good | Good | Poor | Poor | Poor | Poor |

Table 1 shows the evaluation results of the biaxially stretched films obtained in the Examples and Comparative Examples. The biaxially stretched films obtained in the Examples each had a specific tear strength, and thus, although they were formed from polylactic acid, they had both punching processability and heat resistance.

**Claims**

1. A biaxially stretched film comprising polylactic acid,

   the biaxially stretched film having a film tear strength of 50 N/mm or more and less than 100 N/mm when torn in at least one direction, as measured in accordance with JIS-K7128-3, and
   the biaxially stretched film having a heating dimensional change rate of within ±5% in both the machine direction (MD) and the traverse direction (TD) in a 100°C atmosphere and a heating load dimensional change rate of within ±7% in the MD in a 100°C atmosphere.

2. The biaxially stretched film according to claim 1, wherein the at least one direction is the MD or the TD.

3. A protective film comprising the biaxially stretched film of claim 1 or 2.

## INTERNATIONAL SEARCH REPORT

| International application No. |
|---|
| **PCT/JP2023/024129** |

**A. CLASSIFICATION OF SUBJECT MATTER**

*C08J 5/18*(2006.01)i; *B29C 55/12*(2006.01)i
FI: C08J5/18 ZBP; B29C55/12

According to International Patent Classification (IPC) or to both national classification and IPC

**B. FIELDS SEARCHED**

Minimum documentation searched (classification system followed by classification symbols)

C08J5/00-5/02; C08J5/12-5/22; B29C55/00-55/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-161925 A (UNITIKA LTD.) 10 June 2004 (2004-06-10)<br>claim 1, paragraph [0027], example 1 | 1-3 |
| A | JP 2019-104247 A (TORAY INDUSTRIES, INC.) 27 June 2019 (2019-06-27)<br>claim 1, paragraph [0034] | 1-3 |
| A | JP 2006-131798 A (MITSUBISHI PLASTICS, INC.) 25 May 2006 (2006-05-25)<br>claims 1-2, 5, paragraph [0090], examples | 1-3 |
| A | JP 2005-015783 A (TORAY INDUSTRIES, INC.) 20 January 2005 (2005-01-20)<br>claim 1, paragraphs [0001], [0046], example 1 | 1-3 |
| A | JP 2003-136592 A (ASAHI KASEI KABUSHIKI KAISHA) 14 May 2003 (2003-05-14)<br>claims 1-2, 4, examples | 1-3 |
| A | JP 2013-103946 A (MITSUBISHI PLASTICS, INC.) 30 May 2013 (2013-05-30)<br>claim 1, examples | 1-3 |
| A | JP 2013-163763 A (NITTO DENKO CORP.) 22 August 2013 (2013-08-22)<br>claim 1, comparative examples 4, 6, 8 | 1-3 |

☐ Further documents are listed in the continuation of Box C.      ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **04 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024129**

| Patent document cited in search report | | | Publication date (day/month/year) | Patent family member(s) | Publication date (day/month/year) |
|---|---|---|---|---|---|
| JP | 2004-161925 | A | 10 June 2004 | (Family: none) | |
| JP | 2019-104247 | A | 27 June 2019 | (Family: none) | |
| JP | 2006-131798 | A | 25 May 2006 | (Family: none) | |
| JP | 2005-015783 | A | 20 January 2005 | (Family: none) | |
| JP | 2003-136592 | A | 14 May 2003 | TW 200300150 A | |
| JP | 2013-103946 | A | 30 May 2013 | (Family: none) | |
| JP | 2013-163763 | A | 22 August 2013 | US 2014/0377540 A1 claim 1, comparative examples 4, 6, 8 | |

Form PCT/ISA/210 (patent family annex) (January 2015)

**EP 4 549 497 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4699180 B